# EUROPEAN PATENT APPLICATION

(11) **EP 4 492 333 A1**
(43) Date of publication of application: **15.01.2025**
(21) Application number: 24183110.6
(22) Date of filing: 19.06.2024
(51) Int. Cl.: G06V 10/75

(54) **SYMBOL MONITORING METHODS AND SYSTEMS**

(30) Priority: 13.07.2023 IN 202311047197; 18.10.2023 US 202318489099
(71) Applicant: Honeywell International Inc., Charlotte, NC 28202 (US)
(72) Inventor: NAGY, Scott, Charlotte, 28202 (US); LAYDEN, Edward Colin, Charlotte, 28202 (US); SHARMA, Pankaj, Charlotte, 28202 (US)
(74) Representative: LKGlobal UK Ltd.

(57) **Abstract**

Vehicle systems and methods are provided for monitoring symbology in a video stream associated with a software application. A method involves a programmable device identifying, within a first portion of a frame of a video stream, metadata identifying one or more characteristics of a symbol to be analyzed and corresponding indicia of an expected location of the symbol within a second portion of the frame, extracting a subset of pixels from the second portion of the frame encompassing the expected location, and providing the extracted subset of pixels from the second portion of the frame and the metadata from the first portion of the frame to a hardware symbol detector configurable to determine one or more metrics associated with the symbol based on the extracted subset of pixels and the metadata and provide the one or more metrics to the software application.

## Description

### CROSS REFERENCE TO RELATED APPLICATION

This application claims priority to India Provisional Patent Application No. 202311047197, filed July 13, 2023, the entire content of which is incorporated by reference herein.

### TECHNICAL FIELD

The subject matter described herein relates generally to aircraft systems, and more particularly, embodiments of the subject matter relate to monitoring symbology rendered within video frames.

### BACKGROUND

Modern electronic displays for vehicles (such as aircraft, automobiles, marine vessels, or trains) display a considerable amount of information, such as vehicle position, navigation and terrain information. In the case of an aircraft, many modern flight deck displays (or cockpit displays) are utilized to provide a number of different displays from which the user can obtain information or perform functions related to, for example, navigation, flight planning, guidance and navigation, and performance management. Modern aircraft often include one or more displays arranged or placed directly in front of a pilot or co-pilot, alternatively referred to as forward displays since they are viewable in the forward line-of-sight, along with separate displays arranged or placed adjacent to or in between a pilot and co-pilot, which may alternatively be referred to as head down displays.

A graphics processing unit (GPU) is typically used to generate the symbology to be displayed on a display. Some symbols displayed on a cockpit display are considered to be critical to safe operation of an aircraft. Accordingly, in a safety-critical display system, the video data or image data output by the GPU is monitored to verify that text, shapes, lines or other symbols that are used to safely operate a vehicle are rendered as intended and do not provide misleading information. Given the number of potentially critical symbols that could be rendered in a single frame, it is desired to provide a method and system for symbol monitoring with improved throughput. Other desirable features and characteristics will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Methods, devices and systems for monitoring symbology in a video stream associated with a software application are provided. An exemplary method involves a programmable device identifying, within a first portion of a frame of the video stream, metadata identifying one or more characteristics of a symbol to be analyzed and corresponding indicia of an expected location of the symbol within a second portion of the frame, extracting a subset of pixels from the second portion of the frame encompassing the expected location, and providing the extracted subset of pixels from the second portion of the frame and the metadata from the first portion of the frame to a hardware symbol detector configurable to determine one or more metrics associated with the symbol based on the extracted subset of pixels and the metadata and provide the one or more metrics to the software application.

An apparatus for a programmable logic device is also provided. The programmable logic device includes a symbol list manager configurable to obtain a list of symbols to be monitored from a first portion of a frame in a frame buffer at a processing unit, a marked pixel detector configurable to identify a marked pixel associated with a symbol from the list of symbols within a second portion of the frame in the frame buffer, a data storage element configurable to be accessible to the processing unit, and a symbol detector to extract a subset of pixels from a third portion of the frame based at least in part on the marked pixel within the second portion of the frame, determine one or more metrics indicative of one or more graphical characteristics of the symbol based at least in part on monitoring configuration metadata associated with the symbol in the first portion of the frame and write the one or more metrics to the data storage element at a location associated with the symbol within the data storage element.

An apparatus for a computer-readable medium is also provided. The computer-readable medium has computer-executable instructions stored thereon that, when executed by a processing system, cause the processing system to identify, within a first portion of a frame of a video stream from a graphics processing unit, metadata identifying one or more characteristics of a symbol to be analyzed and corresponding indicia of an expected location of the symbol within a second portion of the frame, extract a subset of pixels from the second portion of the frame encompassing the expected location, determine one or more metrics associated with the symbol based on the extracted subset of pixels from the second portion of the frame and the metadata from the first portion of the frame, and write the one or more metrics to a data storage accessible to a software application.

Furthermore, other desirable features and characteristics of the subject matter described herein will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a block diagram illustrating a vehicle system suitable for use with an aircraft in accordance with one or more exemplary embodiments;
FIG. 2 is a block diagram of a programmable logic device suitable for use as a symbol monitor in the vehicle system of FIG. 1 in an exemplary embodiment;
FIG. 3 depicts an exemplary arrangement of a graphics frame buffer of a graphics processing unit (GPU) in the vehicle system of FIG. 1 suitable for use with the programmable logic device of FIG. 2 in an exemplary embodiment; and
FIG. 4 is a flow diagram of a symbol monitoring process suitable for use with the programmable logic device of FIG. 2 in the vehicle system of FIG. 1 in an exemplary embodiment.

### DETAILED DESCRIPTION

The following detailed description is merely exemplary in nature and is not intended to limit the subject matter of the application and uses thereof. Furthermore, there is no intention to be bound by any expressed or implied theory presented in the preceding technical field, background, brief summary, or the following detailed description.

Embodiments of the subject matter described herein relate to systems and methods for monitoring symbology on graphical user interface (GLTI) displays with increased throughput to increase the number of symbols capable of being monitored or analyzed within an individual frame of a video stream. For purposes of explanation, the subject matter is described herein primarily in the context of monitoring symbology on a flight deck display, an electronic flight bag (EFB) or other cockpit display onboard an aircraft in an aviation context. However, it should be understood that the subject matter described herein is not necessarily limited to use with aircraft or other vehicle systems or applications and may be similarly utilized in other applications, systems or environments, including, but not limited to use with other types of vehicles (e.g., automobiles, marine vessels, trains, etc.).

As described in greater detail below, a programmable device, such as a field programmable gate array (FPGA) or another suitable application specific integrated circuit (ASIC) or system on a chip (SoC), is configurable to monitor symbology in a video stream associated with a software application that is generated or otherwise provided by a graphics processing unit (GPU). For purposes of explanation, but without limitation, the programmable device may be alternatively referred to herein as a symbol monitor, a critical data monitor, a critical symbol monitor, or variants thereof. The programmable device analyzes a portion of a video frame of the video stream that is not rendered or otherwise presented to identify metadata identifying one or more characteristics of the symbols to be analyzed within the respective video frame and corresponding indicia of the expected locations of the respective symbols within the portion of the video frame that is rendered or otherwise displayed. Using the expected location information, the programmable device extracts respective subsets of pixels encompassing the expected location of a respective symbol from the video frame and provides the extracted subset of pixels along with the metadata identifying one or more characteristics of the respective symbol to a hardware symbol detector. The hardware symbol detector determines one or more metrics associated with the respective symbol based on the extracted subset of pixels and the metadata and output the one or more metrics back to the software application or another entity for analysis to verify that the displayed symbol at the particular location within the video frame matches or otherwise corresponds to the symbol that was intended to be drawn by the GPU and/or the software application based on the determined metrics.

In a safety critical display system such as an aircraft display system or other vehicle system, the symbol monitor monitors the output from a GPU to verify that text, shapes, lines, etc. that are used to safely operate the vehicle are rendered as intended and do not provide misleading information. For example, the number of symbols for monitoring is about 15 for Part 25 aircrafts, and including engine or battery/propeller related symbols can increase the number of critical symbols to be simultaneously monitored up to as many as 40 or more. At the same time, it is desirable that a misleading critical symbol be accurately detected and annunciated within a limited amount of time after being displayed. Further, in some scenarios, it is desirable to have failures debounced by requiring at least two consecutive failures before annunciating a misleading critical symbol. Since graphics generation and pixel marking is done by software executing in the GPU producing new frames at a variable rate (e.g., between 10Hz to 40Hz), it is desirable to decouple the marking rate from detection rate to allow the programmable device functioning as the symbol monitor to analyze and detect misleading symbols at a faster rate (e.g., 60 Hz). This allows for increased throughput in terms of a faster overall symbol monitoring rate since the GPU can mark symbols at a variable lower rate while the symbol monitor runs the detection at a fixed and higher rate, thereby increasing the number of symbols per frame that can be analyzed by the symbol monitor.

To decouple the pixel marking from the symbol monitoring, the GPU marks symbols for monitoring within every frame of pixels generated by the GPU as part of the video stream output by the GPU. The symbol monitor described herein is capable of receiving Alpha, Red, Green, Blue (ARGB) video or graphics pixel streams along with corresponding lists containing the type (line or character) for a particular critical or safety-related symbol to be monitored and the expected location within the pixel stream of the respective symbols. The symbol monitor assigns each symbol from the list to be monitored to an available hardware symbol detector for subsequent analysis. In this regard, instead of software assigning critical symbols from a master list of symbols to a hardware detector on a piecemeal basis one at a time, the entire list of symbols is provided to the symbol monitor, which in turn manages the assignment of the symbols to hardware detectors.

The hardware symbol detector will detect the "marked" pixels of characters or lines, depending on the selected type, within the respective symbol's specified pixel area or range where it is expected to be located, determine the horizontal and vertical pixel locations of the marked characters or lines, and extract the character or line pixels. For characters, the hardware symbol detector compresses the pixel data and returns the compressed character data to the software application for verification by writing the compressed character data to a data storage element (e.g., a random-access memory (RAM)). For lines, the hardware symbol detector determines the pixel coordinate locations defining the extents of the line and returns the pixel coordinate data to the software application for verification by writing the pixel coordinate data to the data storage element. In this regard, instead of the software application reading the results from a hardware detector directly, the list of results are provided via a RAM or other data storage that the software application can read on an as needed basis.

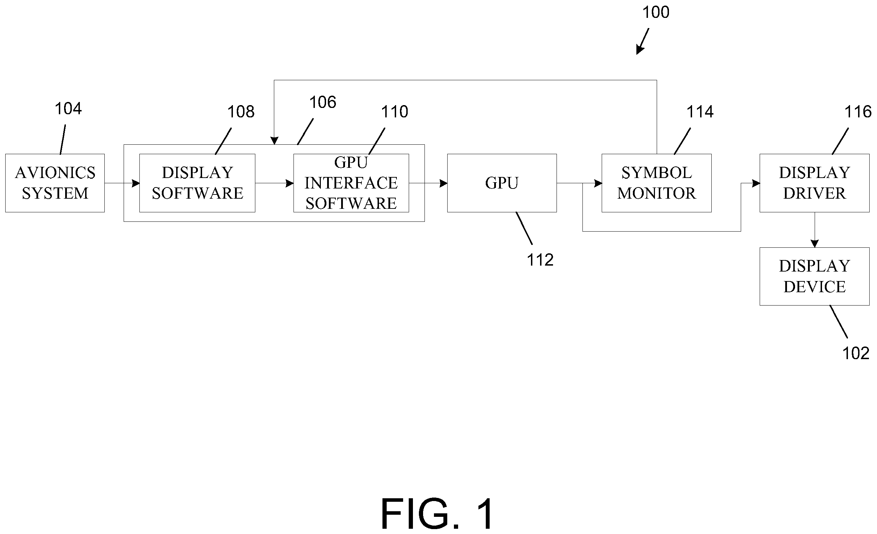

FIG. 1 depicts an exemplary embodiment of a system 100 suitable for use with a vehicle, such as an aircraft, to monitor symbology presented on a display device 102 based on data provided by one or more onboard systems 104. In this regard, in an aviation context, the onboard system 104 generally represents any sort of avionics system capable of providing data and/or information regarding the operation of the aircraft, such as, for example, a flight management system (FMS), a navigation system, a communications system, an autopilot system, an autothrust system, a weather system, an air traffic management system, a radar system, a traffic avoidance system, hydraulics systems, pneumatics systems, environmental systems, electrical systems, engine systems, trim systems, lighting systems, crew alerting systems, electronic checklist systems, an electronic flight bag and/or another suitable avionics system.

In exemplary implementations, the avionics system 104 is communicatively coupled to a processing system 106 (e.g., via an avionics bus) that generally represents the one or more processors, central processing units (CPUs), controllers, microprocessors, microcontrollers, processing cores and/or other hardware computing resources configured to support one or more software applications 108, 110 that are configurable to convert the operational data or other information provided by the avionics system 104 into corresponding commands for symbology that is representative of or otherwise influenced by the avionics data. For example, in the illustrated implementation, the processing system 106 executes or otherwise supports a display software application 108 that converts real-time data and/or information regarding the operation of the aircraft that is provided by the avionics system 104 into corresponding characters or symbols that depict or otherwise graphically represent the data from the avionics system 104. In the illustrated implementation, a GPU interface software application 110 receives indicia of the characters or symbols commanded to be drawn by the display software 108 into corresponding graphics commands that may be utilized by a GPU 112 to generate or otherwise render the corresponding characters or symbols.

The GPU 112 generally represents the one or more processors, processing cores and/or other hardware computing resources that receive graphics commands from the processing system 106 and generates corresponding frames of pixel data that are sequentially output or otherwise provided as a video stream corresponding to the received graphics commands. In exemplary implementations described herein, the pixel data for a given frame includes red, green, and blue color intensity values, an alpha value denoting opacity, and pixel location coordinates denoting location of the pixels with respect to the display area of the display device 102. For example, the GPU 112 may include a geometry engine that receives graphics commands from the processing system 106 and performs any necessary rotation, translation or other geometrical and spatial manipulation of the data, before providing the resulting output to a rendering engine that generates corresponding pixel data and pixel location coordinates for each pixel in the image to be displayed on the display device 102. In one implementation, the pixel data may include 8 bits of red value, 8 bits of blue value, 8 bits of green value, and 8 bits of an opacity value, where the pixel data for each pixel can be saved to a pixel buffer or frame buffer that can be readout by the symbol monitor 114 and provided to the display driver 116.

In exemplary implementations, the processing system 106 identifies critical symbology for monitoring by the symbol monitor 114, which can be any sort of graphical symbol, including lines and curves, or alphanumeric characters that can be displayed on the display device 102. The processing system 106 provides indication of the critical symbology to be monitored so that the GPU 112 can mark or otherwise designate the symbology to be monitored within a respective frame of pixels. In some implementations, the GPU 112 marks pixels within the respective active critical symbols within a respective video frame of pixels, for example, by setting the least significant bit of the alpha channel at a respective pixel location to a value (e.g., '1') that indicates an active critical symbol to be monitored associated with that respective pixel location within the current video frame. Additionally, the GPU 112 may write, generate, populate or otherwise define metadata for the respective active critical symbol that contains monitoring threshold information, which color component should be compared against a respective monitoring threshold, and whether the selected color component value should be above or below the threshold to indicate marking. Thereafter, as described in greater detail below, the symbol monitor 114 checks the least significant bit of the alpha channel at a respective pixel location for indication of a symbol to be monitored, and when the alpha channel indicates potential presence of a symbol to be monitored, the symbol monitor 114 compares the value (or intensity) of the selected color component channel designated by the metadata at that respective pixel location against the corresponding monitoring threshold to determine whether the pixel is considered to be marked.

Still referring to FIG. 1, the symbol monitor 114 generally represents the programmable logic device and corresponding software, firmware, hardware and/or other computing resources associated with the programmable logic device that is configurable to support monitoring a video stream of video pixel frames provided by the GPU 112 to verify critical symbology has been correctly rendered and displayed and facilitate annunciations of potentially misleading critical symbology, as described in greater detail below. Depending on the implementation, the symbol monitor 114 may be realized as a field programmable gate array (FPGA), a system on a chip (SoC), an application specific integrated circuit (ASIC) or another suitable combination or configuration of one or more processors, central processing units (CPUs), controllers, microprocessors, microcontrollers, processing cores and/or other hardware computing resources configured to support the operation described herein.

The display driver 116 generally represents the circuitry and/or other hardware that is configurable to provide an interface between the video stream output of the symbol monitor 114 and the video stream input to the display device 102. In this regard, the display driver 116 may include any sort of processing system, hardware, software, firmware and/or other components configurable to receive the video frame pixel data or other display commands received as video input from the GPU 112 and convert the received video input into corresponding electrical signals with the appropriate signal characteristics that cause the display device 102 to display, depict or otherwise generate the desired symbology for the respective video frames of the video stream. In this regard, the display device 102 is realized as an electronic display capable of graphically displaying flight information or other data associated with operation of the aircraft generated by the GPU 112 under control of the display software 108 executing at the processing system 106. The display device 102 may be configured to support multi-colored or monochrome imagery, and could include or otherwise be realized using a liquid crystal display (LCD), a light emitting diode (LED) display, an organic light emitting diode (OLED) display, a heads-up display (HUD), a heads-down display (HDD), a plasma display, a projection display, a cathode ray tube (CRT) display, or the like.

It should be appreciated that FIG. 1 depicts a simplified representation of a system 100 and is not intended to be limiting. For example, in some implementations, the display device 102 may be realized as a forward-looking display (e.g., a primary flight display (PFD)), a head-up display or another forward display integrated into a cockpit flight deck, while in other implementations, the display device 102 may be realized as an electronic flight bag (EFB) or other device that is communicatively coupled to the avionics system(s) 104 onboard the aircraft (e.g., over a wired network, a wireless network, or another suitable communications network), where one or more of the processing system 106, the GPU 112, the symbol monitor 114 and/or the display driver 116 may be implemented at an EFB or other device separate from the aircraft that includes the avionics system(s) 104.

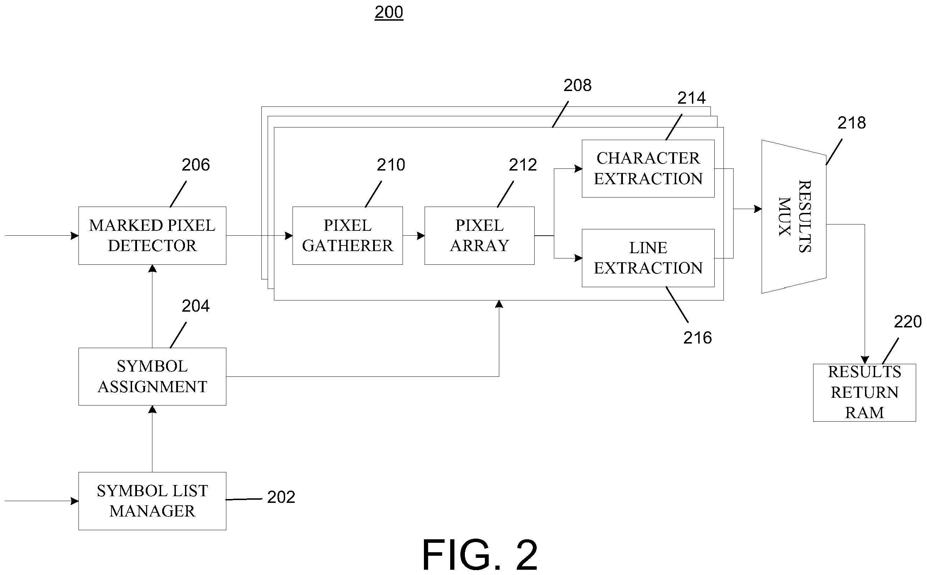

FIG. 2 depicts an exemplary implementation of a programmable logic device 200 suitable for use as the symbol monitor 114 in the system 100 of FIG. 1. The programmable logic device 200 includes or otherwise supports a symbol list management service 202 (or symbol list manager), which generally represents the software, firmware and/or other components configurable to receive, from the GPU, data or information identifying a list of potential critical symbols to be monitored within a respective video frame. In exemplary implementations, the GPU provides metadata for the list of symbols within an invisible portion of the video pixel frame, where the critical symbol metadata includes the monitoring configuration metadata for each symbol within the list. In this regard, the monitoring configuration metadata may include the *x* and *y* starting coordinate locations of the pixel region containing the respective symbol within the respective video pixel frame, the *x* and *y* ending coordinate location of the pixel region containing the respective symbol within the respective video pixel frame, an identifier associated with the respective symbol, the threshold intensity of the selected color to be detected at or within that pixel region, the pixel color component to be utilized for the comparison to the threshold intensity (e.g., red, blue, green or alpha), indication of whether the pixel color component should be above or below the threshold intensity, whether the symbol is oriented in portrait or landscape, whether the symbol is a character or a line and whether the symbol is currently active in the displayed format or inactive.

The symbol list manager 202 is coupled to a symbol assignment service 204, which generally represents the software, firmware and/or other components configurable to analyze the monitoring configuration metadata to identify the symbols from the list that are currently active and assign individual symbols to individual hardware symbol detectors 208 associated with the programmable logic device 200. In this regard, when an interrupt signal or other output of a respective hardware symbol detector 208 indicates the respective hardware symbol detector 208 is idle or not enabled, the symbol assignment service 204 selects or otherwise identifies the next active symbol from the critical symbol list and provides the monitoring configuration metadata associated with that selected symbol to the assigned hardware symbol detector 208. The symbol assignment service 204 also provides the monitoring configuration metadata to a marked pixel detection service 206 (or marked pixel detector), which generally represents the software, firmware and/or other components configurable to obtain the visible portion of the video pixel frame from a frame buffer of the GPU and utilize the alpha channel component markings and monitoring threshold metadata to detect marked pixels within the frame.

The hardware symbol detector 208 generally represents the logic or other configurable circuitry or hardware that is capable of analyzing and processing pixels with low latency and without the overhead that would otherwise be associated with software symbol detection (e.g., examining pixels captured into a RAM frame buffer using read/write operations to the memory device). In exemplary implementations, each hardware symbol detector 208 includes a pixel gathering component 210 (or pixel gatherer), a pixel array component 212, a character extraction component 214 (or character extractor) and a line extraction component 216 (or line extractor). The pixel gatherer 210 utilizes the marked pixel detection information from the marked pixel detector 206 and the monitoring configuration metadata associated with the symbol assigned by the symbol assignment service 204 to select or otherwise identify a subregion of pixels (e.g., a 128 by 128 box or two-dimensional array of pixels) within the respective symbols pixel region based on the location marked pixels and the starting and ending xy coordinate locations associated with the respective symbol. In this regard, the gathered subregion of pixels effectively provides a box that extends vertically from the first marked pixel for 128 rows or until the last row of the video stream is encountered. Similarly, the box corresponding to the gathered subregion of pixels extends horizontally from the first marked pixel for 128 columns or until the last column of the video stream is encountered. The resulting subregion of gathered pixels corresponding to the symbol being monitored is stored or otherwise maintained by the pixel array component 212 for subsequent analysis by the extraction components 214, 216. In some implementations, the pixel gatherer 210 identifies left and right coordinates for columns within the array that contain no marked pixels for use as left and right character column boundaries by the character extractor 214, and scans each column in the pixel array to detect character top and bottom row boundaries for use by the character extractor 214. Top, bottom, left and right boundaries may be stored in an array at the pixel array component 212 for use by the character extractor 214.

When the monitoring configuration metadata for an assigned symbol indicates the symbol is a character, the character extractor 214 generally represents the component of the hardware symbol detector 208 that is configurable to utilize the character boundary information maintained at the pixel array component 212 to locate and copy character subregions of pixels from the pixel array subregion associated with the symbol being monitored and write the character pixels to a data storage element 220 accessible by a software application at the processing system 106 to verify or otherwise validate the respective symbol. In some implementations, the character extractor 214 compresses the copied character pixels into an 8 by 8 pixel square (or whatever maximum sized region is supported by the resources of the programmable logic device 200) and then writes the compressed character pixels to the data storage element 220. For example, to compress a character into an 8 by 8 pixel square, the respective character's height and width is divided by 8. The pixel array is scanned from left to right, top to bottom. Horizontally, each pixel in 1/8th of a character row is logically ORed together. After 8 logically ORed sets of pixels have been generated, a row is available for vertical compression using the same compression algorithm, where all compressed rows in 1/8^{th} of a character's height are logically ORed together. The logically ORed rows are saved as a row in the 8x8 character results square.

When the monitoring configuration metadata for an assigned symbol indicates the symbol is a line, the line extractor 216 generally represents the component of the hardware symbol detector 208 that is configurable to save the absolute *xy* coordinates of the pixels within the line in the data storage element 220. In some implementations, for storage efficiency, only the coordinates of every eighth pixel is stored, and a set of 5 coordinate locations that identify the 0%, 25%, 50%, 75% and 100% points along the length of the line are returned. In exemplary implementations, the different instances of the hardware symbol detector 208 are coupled to the data storage element 220 via a multiplexer 218 that facilitates writing the result metrics (e.g., compressed character or line pixel coordinates) determined by the respective hardware symbol detector 208 for a respective symbol to the data storage element 220 in the same order as the respective symbols were received from the GPU. In this regard, the compressed character or line pixel coordinates and other data written to the data storage element 220 by a respective hardware symbol detector 208 function as statistics or metrics indicative of the shape, location or other graphical characteristics of the depicted symbols within the gathered pixel array for the particular symbol, which, in turn, may be analyzed by software at the processing system 106 to verify that the particular symbol is depicted at the correct location, that the particular symbol is rendered with the correct shape, that any lines are drawn correctly (e.g., with the correct slope, angle and/or location on the display device 102), and/or the like. In one or more implementations, the data storage element 220 is realized as a random-access memory (RAM), alternatively referred to as a results return RAM. The results return RAM 220 may be configured as a ping-pong buffer such that the results return RAM 220 can be locked to prevent updating while a read is in process from a pong buffer while new results metrics are written to the ping buffer.

Referring to FIG. 2 with reference to FIG. 1, the results return RAM 220 allows the hardware symbol detectors 208 and/or the programmable logic device 200 to provide an ordered list of results metrics corresponding to the various active symbols that software at the GPU 112 and/or the processing system 106 can access or read as needed, rather than having the software read the results from the hardware symbol detectors 208 and/or the programmable logic device 200 directly, which may constrain the hardware symbol detectors 208 and/or the programmable logic device 200 to the rate or frequency of the software at the GPU 112 and/or the processing system 106. Over time, the programmable logic device 200 functioning as the symbol monitor 114 builds a list of monitoring results for all of the active symbols in the results return RAM 220 which can be accessed asynchronously by a software application at the processing system 106 and/or the GPU 112 that is external to the symbol monitor 114, 200, thereby allowing the software application to always have access to the most recent results for processing as needed when needed. Thus, operations of the software verifying the symbology are not constrained by and are decoupled from the operations of the symbol monitor 114, 200. This is in contrast to other approaches where an individual monitor maintains results for only one symbol and was forced to suspend or delay operations until the until software was able to read the results for the symbol and assign another symbol to that monitor for processing. Similarly, in such approaches, the verifying software is also forced to wait for the individual monitor to finish its processing before it could analyze the results on a symbol-by-symbol or monitor-by-monitor basis.

It should be noted that although FIGS. 1-2 depict a simplified implementation including a single GPU 112, in practice, the symbol monitor 114, 200 may be configurable to support concurrent monitoring of any number of GPUs using any number of hardware symbol detectors 208. In such implementations, the symbol monitor 114, 200 merges the video pixel frame display output from each of the GPUs 112 into a single output to be displayed at the display device 102, where the hardware symbol detectors 208 analyze pixel subregions after merging video pixel frames from different GPUs 112. In such implementations, each GPU 112 may send an independent list of symbols and corresponding monitoring configuration metadata to the symbol monitor 114, 200, where the symbol list manager 202 merges symbol list information into a single list of critical symbols to be allocated and assigned amongst the hardware symbol detectors 208. When a hardware symbol detector 208 is enabled or active, the hardware symbol detector 208 may provide an interrupt signal or other output that indicates the respective hardware symbol detector 208 is busy, before providing an interrupt signal or other output indicating the respective hardware symbol detector 208 is idle or not enabled after writing its results metrics to the results return RAM 220, thereby facilitating the symbol assignment service 204 assigning the next symbol from the critical symbol list to the available hardware symbol detector 208 for monitoring.

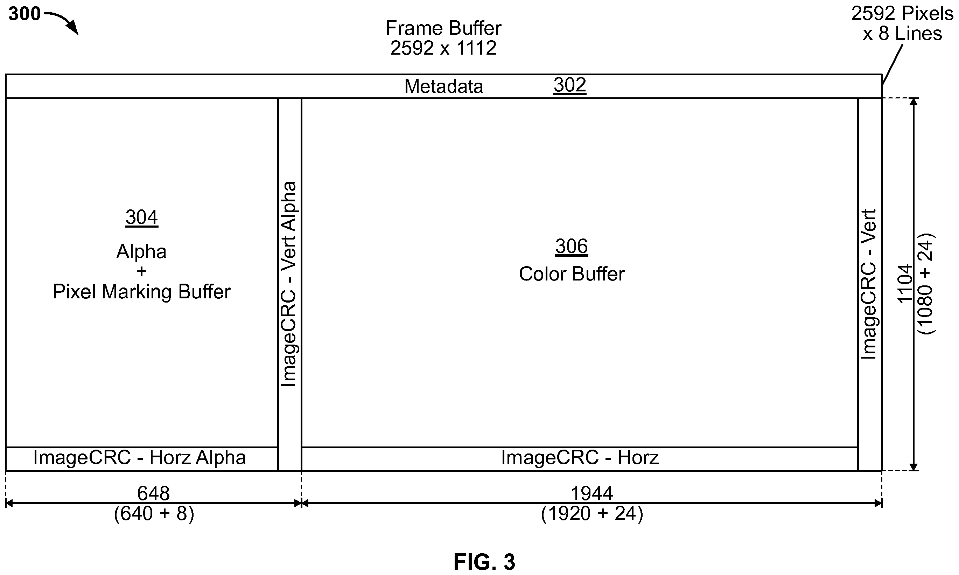

FIG. 3 depicts an exemplary embodiment of an arrangement of pixels within video pixel frame of a graphics frame buffer 300 of a GPU, such as GPU 112, suitable for use with the symbol monitor 114, 200 described above in the context of FIGS. 1-2. In this regard, the graphics frame buffer 300 is implemented using a data storage element or memory within the GPU 112 that is accessible to be read out to the display driver 116 and display device 102 by the symbol monitor 114, 200. The graphics frame buffer 300 is organized such that the top portion 302 of the video pixel frame is dedicated to the monitoring configuration metadata that defines the critical symbol list associated with the respective GPU 112 and the respecting monitoring criteria for the respective symbols. An invisible portion 304 of the graphics frame buffer 300 is allocated to the alpha channel components and other pixel marking information that is not rendered or displayed on the display device 102, while the visible portion 306 of the graphics frame buffer 300 includes the color channel components of the visible pixels of the video pixel frame that are rendered on the display device 102. The symbol list manager 202 accesses or otherwise obtains the critical symbol list and corresponding monitoring configuration metadata from the lines of the upper portion 302 of the graphics frame buffer 300 and provides the corresponding critical symbol information to the symbol assignment service 204 that coordinates monitoring of active symbols with the marked pixel detector 206 and the hardware symbol detectors 208. The marked pixel detector 206 accesses or otherwise obtains the invisible portion 304 of the graphics frame buffer 300 to identify marked pixels within the visible portion 306 of the graphics frame buffer 300 and provides the respective subregions of pixels of the visible portion 306 associated with the pixel coordinate location or range for a symbol being monitored to the pixel gatherer 210 of the hardware symbol detector 208 assigned to monitor that symbol.

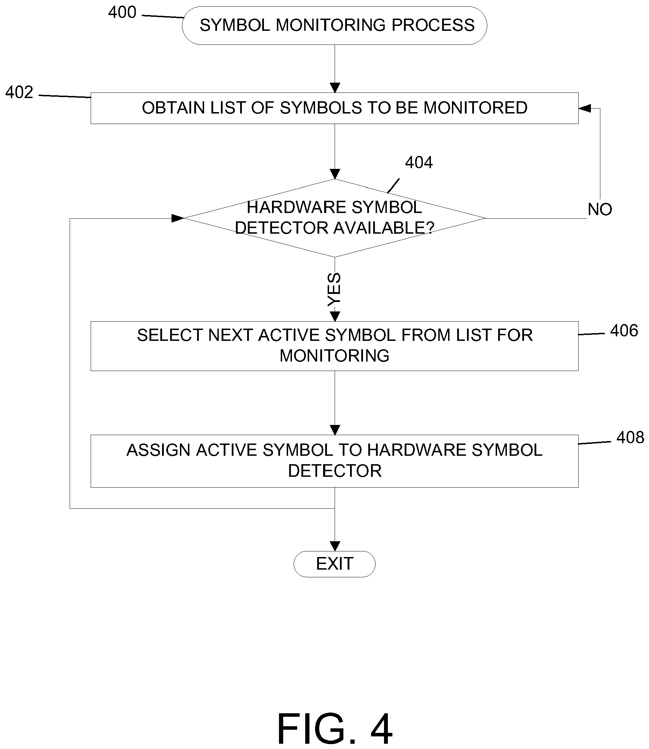

FIG. 4 depicts an exemplary embodiment of a symbol monitoring process 400 suitable for implementation by a programmable logic device functioning as a symbol monitor, such as the programmable logic device 200 of FIG. 2 functioning as the symbol monitor 114 in FIG. 1. The various tasks performed in connection with the illustrated process may be implemented using hardware, firmware, software executed by processing circuitry, or any combination thereof. For illustrative purposes, the following description may refer to elements mentioned above in connection with FIGS. 1-3. In practice, portions of the symbol monitoring process 400 may be performed by different elements of a display system. That said, exemplary embodiments are described herein in the context of the symbol monitoring process 400 being primarily performed by the symbol monitor 114, 200, the GPU 112 and/or the processing system 106. It should be appreciated that the symbol monitoring process 400 may include any number of additional or alternative tasks, the tasks need not be performed in the illustrated order and/or the tasks may be performed concurrently, and/or the symbol monitoring process 400 may be incorporated into a more comprehensive procedure or process having additional functionality not described in detail herein. Moreover, one or more of the tasks shown and described in the context of FIG. 4 could be omitted from a practical embodiment of the symbol monitoring process 400 as long as the intended overall functionality remains intact.

The symbol monitoring process 400 initializes or otherwise begins by receiving or otherwise obtaining information identifying a list of symbols to be monitored within a video pixel frame (task 402). For example, as described above, display software 108 associated with rendering a PFD on the display device 102 may receive inertial measurement data or other navigational data from one or more avionics systems 104 and generate corresponding display commands for the GPU 112 to draw a horizon line on a PFD display while marking the horizon line as a critical symbol for monitoring. The GPU interface software 110 provides corresponding commands to the GPU 112 to cause the GPU 112 to generate corresponding pixel color channel components at the appropriate pixel coordinate locations within the visible portion 306 of the graphics frame buffer 300 along with corresponding alpha channel components and other marking information in the invisible portion 304 of the graphics frame buffer 300 associated with that pixel coordinate location (or range thereof). Additionally, the GPU 112 may write or otherwise update the monitoring configuration metadata within the header portion 302 of the graphics frame buffer 300 to identify the horizon line as an active critical symbol within the current video pixel frame and provide additional metadata to be utilized for monitoring the rendering of the horizon line symbol (e.g., the starting and ending coordinate locations, the line symbol type, etc.). The symbol list manager 202 at the symbol monitor 114, 200 obtains the list of critical symbols from the header portion 302 of the graphics frame buffer 300 and provides indication of the active symbols to the symbol assignment service 204 for assigning individual symbols to different ones of the hardware symbol detectors 208.

The symbol monitoring process 400 continues by identifying when a hardware symbol detector is available, and when a hardware symbol detector is available, the symbol monitoring process 400 selects the next active symbol from the critical symbol list to be monitored and assigns the selected active symbol to the available hardware symbol detector (tasks 404, 406, 408). In this regard, the symbol monitoring process 400 sequentially advances through the critical symbol list assigning active symbols to available hardware symbol detectors until all of the symbols in the critical symbol list have been analyzed. In this regard, when the horizon line on the PFD display is the next active symbol in the critical symbol list to be analyzed, the symbol assignment service 204 provides monitoring configuration metadata associated with the PFD horizon line symbology to the marked pixel detector 206 and the available hardware symbol detector 208 to detect and gather the subregion of pixels encompassing the marked pixels corresponding to the horizon line symbology on the PFD display. Thereafter, the line extractor 216 of the allocated hardware symbol detector 208 utilizes the line type metadata associated with the horizon line symbology to extract pixels from the horizon line and generate corresponding results metrics for the horizon line symbology based on the gathered pixel array 212 encompassing the pixel coordinate location or range associated with the PFD horizon line symbology. The line extractor 216 then writes or otherwise stores the monitoring results metrics for the PFD horizon line symbology (e.g., the compressed pixel coordinate locations) to the location in the results return RAM 220 associated with the PFD horizon line symbology. In this regard, the symbol monitor 114, 200 places the results metrics and other metadata associated with a particular symbol in the results return RAM 220 at a particular fixed location within the results return RAM 220 associated with that symbol for subsequent retrieval by software executing at the processing system 106 for symbol verification.

When the compressed pixel data or other results metrics stored at a particular location in the results return RAM 220 matches the expected data or results metrics for a given symbol, the software at the GPU 112 and/or the processing system 106 validates the display or rendering of that symbol without generating any annunciations. On the other hand, when there is a mismatch between the compressed pixel data or other results metrics stored at a particular location in the results return RAM 220 and the expected data or results metrics for a given symbol, the software at the GPU 112 and/or the processing system 106 may generate an annunciation that the particular symbol on the display device 102 is potentially misleading. In this regard, in some implementations, the software at the GPU 112 and/or the processing system 106 may implement a counter or similar feature to verify that the mismatch occurs for at least a threshold number of successive iterations or instances of monitoring that symbol before generating an annunciation to disregard or suppress annunciations that could be generated based on a spurious or transient condition.

Still referring to FIG. 4, the loop defined by tasks 402, 404, 406 and 408 may repeat continually throughout operation of the system 100 to continually monitor critical symbols to detect and annunciate potentially misleading symbols on the display device 102. In this regard, in exemplary implementations, when a new or different list of critical symbols is received at 402 while the symbol monitor 114, 200 is in the middle of processing a preceding list of critical symbols, the symbol monitor 114, 200 may utilize the monitoring configuration metadata from the new or updated critical symbol list while continuing from the current location within the critical symbol list when selecting the next active symbol at 406, thereby ensuring the symbol monitor 114, 200 processes all the symbols in the list even if an updated list is received during the processing. In this regard, in exemplary implementations, the same symbol appears at the same predefined location in the list, even though the monitoring configuration metadata may change.

Referring to FIGS. 1-4, by decoupling the symbol or pixel marking by the GPU 112 from the symbol monitoring or detection by the symbol monitor 114, 200, the symbol monitor 114, 200 can analyze an increased number of symbols per rendered video frame, depending on the relationship between the relative frequencies of the GPU 112 and the symbol monitor 114, 200 and the number of hardware symbol detectors 208 that are available. For example, for a GPU 112 updating the graphics frame buffer 300 at a rate of 20 Hz, if the symbol monitor 114, 200 operates at a rate of 60 Hz, the symbol monitor 114, 200 implementing the symbol monitoring process 400 may analyze symbols at a rate of three symbols per video frame, per hardware symbol detector 208. Thus, if the symbol monitor 114, 200 includes 3 hardware symbol detectors 208 operating at 60 Hz for a GPU 112 updating the graphics frame buffer 300 at a rate of 20 Hz, the symbol monitor 114, 200 can analyze 9 different critical symbols per refresh or update of the video pixel frame rendered on the display device 102. In this regard, the symbol monitoring rate and misleading symbol detection rate is decoupled from the graphics frame update rate, thereby allowing the symbol monitoring process 400 to support debouncing or successive verification of a potential misleading symbol and still generate an annunciation within a limited period of time (e.g., within 2 seconds of rendering).

Referring to FIGS. 1-4, by marking pixels in the invisible alpha channel portion of the video pixel frame and providing critical symbol list and monitoring configuration metadata with the video pixel frame, the programmable logic components of the symbol monitor 114, 200 can manage the list of active critical symbols to be monitored and the assignment of critical symbols to different hardware symbol detectors. This allows for a better overall symbol monitoring rate since the GPU 112 can mark symbols at a variable rate while the symbol monitor 114, 200 can perform the monitoring at a fixed and higher rate. Additionally, software overhead associated with software at the GPU 112 managing and assigning critical symbols for monitoring to hardware symbol detectors is eliminated while also decoupling the rate of monitoring by hardware symbol detectors from the update rate or frame rate for updating the video pixel frames at the GPU 112. As a result, the symbol monitor 114, 200 can analyze critical symbols at a faster rate per video pixel frame, thereby increasing the throughput of active critical symbols monitored per video pixel frame or unit of time. In this regard, any software, firmware, hardware or other logic components at the symbol monitor 114, 200 are not constrained by the software rendering rate at the GPU 112 to allow for the video pixel frames to be readout from the graphics frame buffer at the GPU 112 to the display device 102 at a faster rate. Sending the critical symbol list and monitoring configuration metadata with each video pixel frame while also providing the pixel marking over the same bus (e.g., a DisplayPort bus) or communications channel also simplifies or eliminates the need for synchronization between the GPU 112 and the symbol monitor 114, 200.

In exemplary implementations, the maximum number of critical symbols is fixed for each instance of the GPU 112 and/or the display software 108, so that the graphics software can assign a fixed entry location for each unique symbol (or tag identifier) in an ordered critical symbol list. In this regard, the symbols are maintained in the same order or location in the critical symbol list irrespective of whether they are currently displayed or active. As described above, in implementations where multiple instances of GPUs 112 are employed, the symbol monitor 114, 200 can merge the display output from each of the GPUs 112 into a single output to be displayed on the display device 102. Each GPU 112 can send an independent list of critical symbol metadata, where the symbol monitor 114, 200 is responsible for merging the critical symbol lists from the GPUs 112. To ensure proper functionality, each respective critical symbol may be completely marked by a single GPU 112 and not distributed over more than one GPU 112 and each symbol is assigned a unique tag identifier, thereby allowing the symbol list manager 202 to merge the critical symbol lists and metadata from the different GPUs 112 into a master critical symbol list with corresponding monitoring configuration metadata. The display software 108 or other user applications can communicate to the graphics software at the respective GPU 112 which symbols are considered critical to allow the graphics software at the GPU 112 to mark pixels within all active critical symbols every frame. The symbol monitor 114, 200 will then search the pixels in each frame for these marked pixels to detect and operate on the detected critical symbols via the symbol assignment service 204 and the hardware symbol detectors 208.

As described above, once the symbol monitor 114, 200 receives the list of symbols for monitoring, it will process marked symbols with one hardware symbol detector 208 per respective marked symbol per execution frame. At initialization, software at the GPU 112 and/or the processing system 106 programs the symbol monitor 114, 200 to indicate the number of lines at the top or header portion 302 of the graphics frame buffer 300 that will be used for the critical symbol list metadata. A respective hardware symbol detector 208 of the symbol monitor 114, 200 will process one symbol location in the critical symbol list for every frame of symbol monitor 114, 200 execution. If the metadata at a particular symbol location in the list indicates that the symbol is inactive or that no symbol is displayed, then the symbol monitor 114, 200 and/or symbol assignment service 204 skips over that symbol and processes the next symbol in the list in same execution frame.

When the metadata at a particular symbol location in the list indicates that symbol is active and displayed, the symbol assignment service 204 assigns the symbol to an available hardware symbol detector 208 to perform the symbol detection and monitoring and place the result metrics in the results return RAM 220 along with some of the metadata for that symbol. The results for each symbol can have a predetermined, preassigned, or a fixed location within the results return RAM 220 for subsequent software retrieval. When a new critical symbol list is received while the symbol monitor 114, 200 is still processing the current or previous critical symbol list, the symbol monitor 114, 200 will use the new critical symbol list for metadata but continue from the current location in the new critical symbol list, rather than returning to the first symbol in the new critical symbol list. This ensures that the symbol monitor 114, 200 can process all the symbols in the list even if the updated list is received during the processing.

For the sake of brevity, conventional techniques related to display systems, avionics systems, graphics processing systems, critical symbol monitoring and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of non-transitory storage medium known in the art. An exemplary storage medium is coupled to the processor such that the processor can read information from, and write information to, the storage medium. In the alternative, the storage medium may be integral to the processor. The processor and the storage medium may reside in an ASIC.

The subject matter may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, the foregoing description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. For example, two elements may be coupled to each other physically, electronically, logically, or in any other manner, through one or more additional elements. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of monitoring symbology in a video stream associated with a software application, the method comprising:
identifying, by a programmable device within a first portion of a frame of the video stream, metadata identifying one or more characteristics of a symbol to be analyzed and corresponding indicia of an expected location of the symbol within a second portion of the frame;
extracting, by the programmable device, a subset of pixels from the second portion of the frame encompassing the expected location; and
providing, by the programmable device, the extracted subset of pixels from the second portion of the frame and the metadata from the first portion of the frame to a hardware symbol detector configurable to determine one or more metrics associated with the symbol based on the extracted subset of pixels and the metadata and provide the one or more metrics to the software application.

2. The method of claim 1, wherein identifying the metadata comprises identifying monitoring configuration metadata associated with the symbol within a header portion of the frame of the video stream.

3. The method of claim 2, wherein the header portion comprises an invisible portion of the frame of the video stream.

4. The method of claim 1, wherein identifying the metadata comprises identifying a list of symbols to be monitored using a header portion of the frame of the video stream.

5. The method of claim 4, further comprising:
selecting the symbol from the list of symbols; and
detecting a marked pixel associated with the symbol within a third portion of the frame using the expected location of the symbol within the second portion of the frame, wherein extracting the subset of pixels comprises extracting the subset of pixels encompassing the marked pixel within the second portion of the frame.

6. The method of claim 5, wherein:
detecting the marked pixel comprises detecting the marked pixel within an alpha channel of the frame at a respective location within the alpha channel corresponding to the expected location of the symbol; and
extracting the subset of pixels comprises extracting the subset of pixels encompassing the respective location of the marked pixel within the alpha channel from a color channel of the frame.

7. The method of claim 1, further comprising storing the one or more metrics associated with the symbol in a data storage associated with the programmable device at a location within the data storage corresponding to the symbol.

8. The method of claim 7, wherein the data storage comprises a return results random access memory (RAM) accessible to the software application at a processing unit distinct from the programmable device.

9. A programmable logic device comprising:
a symbol list manager configurable to obtain a list of symbols to be monitored from a first portion of a frame in a frame buffer at a processing unit;
a marked pixel detector configurable to identify a marked pixel associated with a symbol from the list of symbols within a second portion of the frame in the frame buffer;
a data storage element configurable to be accessible to the processing unit; and
a symbol detector to extract a subset of pixels from a third portion of the frame based at least in part on the marked pixel within the second portion of the frame, determine one or more metrics indicative of one or more graphical characteristics of the symbol based at least in part on monitoring configuration metadata associated with the symbol in the first portion of the frame and write the one or more metrics to the data storage element at a location associated with the symbol within the data storage element.

10. The programmable logic device of claim 9, wherein the first portion comprises a header portion of the frame.

11. The programmable logic device of claim 9, wherein the second portion comprises an invisible portion of the frame and the third portion comprises a visible portion of the frame.

12. The programmable logic device of claim 11, wherein the invisible portion comprises an alpha channel of the frame and the visible portion of the frame comprises a color channel of the frame.

13. The programmable logic device of claim 9, wherein:
the data storage element comprises a random access memory (RAM); and
the symbol detector writes the one or more metrics to a location in the RAM associated with the symbol.

14. The programmable logic device of claim 9, wherein an operating frequency associated with the programmable logic device is greater than a frame rate associated with the processing unit updating the frame buffer.

15. The programmable logic device of claim 9, wherein the symbol detector is configurable to extract the subset of pixels and generate a pixel array corresponding to the symbol from the subset of pixels based at least in part on the monitoring configuration metadata associated with the symbol.
